Europäisches Patentamt

European Patent Office

Office européen des brevets

(11) Publication number : **0 468 730 A2**

# (12) EUROPEAN PATENT APPLICATION

(21) Application number : **91306668.4**

(22) Date of filing : **22.07.91**

(51) Int. Cl.⁵ : **H04N 1/40**

(30) Priority : **23.07.90 JP 194181/90**

(43) Date of publication of application :
**29.01.92 Bulletin 92/05**

(84) Designated Contracting States :
**DE FR GB IT**

(71) Applicant : **NIPPON SHEET GLASS CO., LTD.**
**5-11, 3-Chome Doshomachi**
**Chuo-ku Osaka (JP)**

(72) Inventor : **Ueno, Hiroshi**
**5-11, 3-chome, Doshomachi**
**Chuo-ku, Osaka (JP)**
Inventor : **Nishi, Hisami**
**5-11, 3-chome, Doshomachi**
**Chuo-ku, Osaka (JP)**

(74) Representative : **Jackson, David Spence et al**
**REDDIE & GROSE 16, Theobalds Road**
**London, WC1X 8PL (GB)**

(54) **A method of performing binary quantization of an image.**

(57)   A density level of a background portion of an input image (10) is set in units of small regions of the image to form a background image (11), and a density level of a pattern portion of the input image (10) is set in units of small regions of the image to form a local maximum value image (12). A threshold value having a density level intermediate between the set density levels of the set background and pattern portions is set in units of small regions of the image to form a threshold value image (13). Binary quantization of the original image (10) is performed on the basis of the respective threshold values, thereby realizing accurate binary quantization of the image to form a local binary image (14) without being influenced by density variations in the image. Noise can be subsequently eliminated by forming a final binary image (16) by generating the logical product of each binary value in the local binary image (14) with each binary value in a character region image (15) formed by binary quantization of the local maximum value image (12) in relation to a predetermined difference from the background image (11). The background image (11) is formed by replacing pixel values (e) with the minimum pixel value (e₁) found in a small sample area (21). The local maximum value image (12) is formed by replacing pixel values (e) with a maximum pixel value (e₂) is found in a small sample area (21). The sample areas (21) are scanned over the image area (23).

EP 0 468 730 A2

# FIG.1

The present invention relates to a method of performing binary quantization of an image having a background portion and a pattern portion and, more particularly, to a method of performing binary quantization of an image which is suitable for use when pattern measurement is performed by means of image processing.

In a conventional binary quantization method, when a two-dimensional image obtained by an image input apparatus such as a TV camera is to be subjected to binary quantization, a single threshold value is set for the entire image, and the magnitude of density level of the image is discriminated by using this threshold value.

If, however, an image input apparatus such as a TV camera is used, an image used as an imaging target may have brightness variations due to nonuniform illumination of the imaging target. In addition, if printed matter is the imaging target, it may have printing density variations, even though the illumination for the imaging target is uniform.

If binary quantization is performed for the entire image obtained from such an imaging target by using a single threshold value, part of a background portion may be included in a pattern portion and vice versa.

OBJECTS AND SUMMARY OF THE INVENTION

It is an object of the present invention to provide a method of performing binary quantization of an image, which can solve the above-described problem of the prior art and can perform binary quantization, while accurately separating a pattern portion from a background portion in an image to be recognized, without being influenced by variations due to illumination or printing density variations.

In order to achieve the above object, according to the present invention, there is provided a method of performing binary quantization of an image having a background portion and a pattern portion, comprising the steps of setting a density level for the background portion in units of small regions of the image in accordance with an actual density of the background portion, setting a density level for the pattern portion in units of small regions of the image in accordance with an actual density of the pattern portion, setting a threshold value having an intermediate density level relative to the set density levels of the background and pattern portions in units of small regions of the image, and performing binary quantization of the image on the basis of the respective threshold values.

The above, and other, objects, features and advantages of the present invention, will become readily apparent from the following detailed description thereof which is to be read in connection with the accompanying drawings in which the same or corresponding parts are identified by the same reference numerals in the several views.

A threshold value used as a reference value for binary quantization has an intermediate level relative to a density level of a background portion, which is set in accordance with its actual density, and a density level of a pattern portion, which is set in accordance with its actual density, in units of small regions. Therefore, even if an image to be subjected to binary quantization has variations due to illumination or has printing density variations, accurate binary quantization of the image can be performed without being influenced by such variations.

The above, and other, objects, features and advantages of the present invention, will become readily apparent from the following detailed description thereof which is to be read in connection with the accompanying drawings.

BRIEF DESCRIPTION OF THE DRAWINGS

Fig. 1 is a flow chart showing a sequence of formation of various types of images according to an embodiment of the present invention;

Fig. 2 is a view showing arithmetic processing of minimum value extraction to be performed to form a background image according to the embodiment;

Fig. 3 is a view showing image conversion by means of minimum value extraction to be performed to form the background image according to the embodiment;

Fig. 4 is a view showing arithmetic processing of maximum value extraction to be performed to form a local maximum value image according to the embodiment;

Fig. 5 is a view showing image conversion by means of maximum value extraction to be performed to form the local maximum value image according to the embodiment;

Fig. 6 is a view for explaining a method of forming background image according to the embodiment;

Figs. 7(a) to 7(d) are graphs each showing a gradual change in image density level according to the embodiment; and

Figs. 8(a) to 8(h) are graphs, showing the density levels of the respective images in Fig. 1, for explaining removal of noise.

DETAILED DESCRIPTION OF A PREFERRED EMBODIMENT

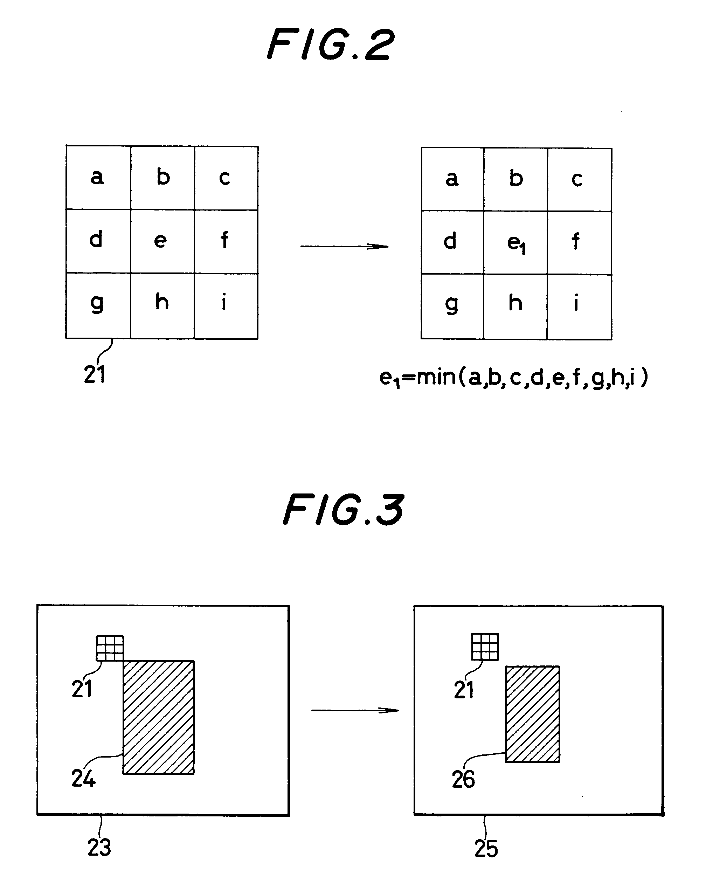

Extraction of a minimum value of image densities (to be referred to as "minimum value extraction" hereinafter) used to form a background image will be described first with reference to Figs. 2 and 3. In this case, an image signal converted into multi-value digital data is called an original image, and each digital value of this original image is called a pixel.

Fig. 2 shows arithmetic processing of minimum value extraction. In this arithmetic processing, a target region 21 having 9 (3 x 3) pixels as a small area is extracted from an original image 23. The target area 21 consists of a matrix array of pixels $a$ to $i$, as shown on the left side in Fig 2. A minimum value $e_1$ of the pixel values is then used to replace the pixel value in the center of a new matrix as shown on the right side in Fig. 2 according to the following equation:

$$e_1 = MIN(a, b, c \ldots i)$$

This arithmetic processing is performed by using the initial matrix array of pixels (see the left matrix in Fig. 2), in which the above-mentioned substitution of pixel values has not been performed yet, with respect to all the pixels in the original image 23 while shifting the position of the matrix in units of pixels.

The above arithmetic processing will be described in detail below. The above-mentioned substitution of image pixels is performed first for the matrix array of pixels $a$ to $i$ located on the upper left portion in the original image 23. The matrix position is then shifted to the right by one pixel, and the substitution of pixel values is performed for the pixels $b$, $c$, $e$, $f$, $h$ and $i$ and other three pixels located on the left side of the pixels $c$, $f$ and $i$. The substitution of image values is performed up to the right end of the matrix while its position is shifted to the right in units of pixels, thus completing substitution of pixel values on the uppermost row. Subsequently, the matrix position is shifted downward by one pixel, and substitution of pixel values on the next row is performed in the same manner as described above. When such processing is sequentially performed up to the lowermost row, first arithmetic processing is completed.

Second arithmetic processing is performed in the same manner as in the first arithmetic processing as needed. However, the second arithmetic processing is performed for the new matrix array of pixels $a$ to $d$, $e_1$ and $f$ to $i$ (see the right matrix in Fig. 2) to which the above-mentioned substitution of pixel values has been performed.

The arithmetic processing can be further performed once or twice as needed. This processing is normally performed a total of two to four times. Note that in this minimum value extraction, the target region 21 may be set to have 25 (5 x 5) pixels or 49 (7 x 7) pixels.

Fig. 3 shows image conversion performed by means of minimum value extraction when a background image is to be formed. Referring to Fig. 3, reference numeral 21 denotes one of target regions as shown in Fig. 2. A pattern 24 such as a character or a mark is described in the original image 23. When first arithmetic processing is performed for this original image 23 in minimum value extraction, an image 25 shown on the right side in Fig. 3 is obtained. As shown in Fig. 3, the pattern 24 is converted into a pattern 26 in the image 25. More specifically, every time arithmetic processing in minimum value extraction is performed, a pattern portion having a high density level is reduced in area to increase a background portion. Eventually, only the background portion is left.

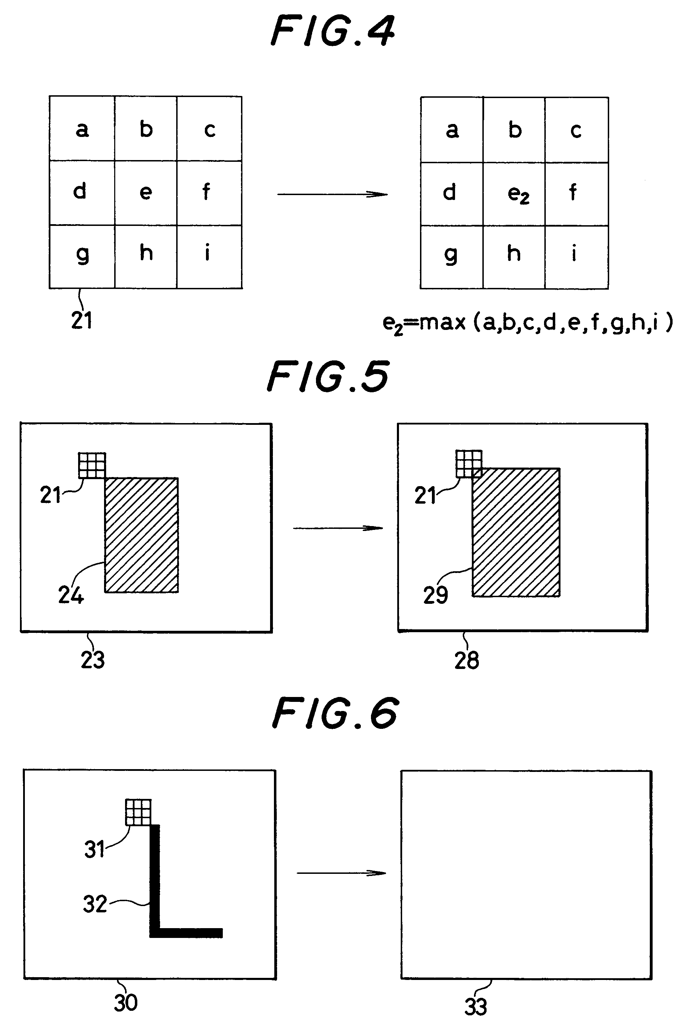

Extraction of a maximum value of image densities (to be referred to as "maximum value extraction" hereinafter) used to form a local maximum value image will be described next with reference to Figs. 4 and 5.

Fig. 4 shows arithmetic processing of maximum value extraction to be performed to form a local maximum value image. Similar to the minimum value extraction, in this arithmetic processing, a target region 21 having 3 x 3 pixels as a small area is extracted from an original page 23. A maximum value $e_2$ of a matrix array of pixels $a$ to $i$ shown on the left side in Fig. 4 is used to replace the pixel value in the center of a new matrix shown on the right side in Fig. 4 according to the following equation:

$$e_2 = MAX(a, b, c \ldots i)$$

Similar to the case of minimum value extraction, this arithmetic processing is performed for all the pixels in the original image 23 by using the initial matrix array of pixels (see the left matrix in Fig. 4), in which the above-mentioned substitution of pixel values has not been performed yet, while shifting the position of the matrix in units of pixels.

The above-described arithmetic processing is normally performed two to four times. Similar to the case of minimum value extraction, the second arithmetic processing is performed for the new matrix array of pixels $a$ to $d$, $e_2$ and $f$ to $i$ (see the right matrix in Fig. 4) to which the above-mentioned substitution of pixel values is performed by the first arithmetic processing. In this maximum value extraction, similar to the case of minimum value extraction, the target region 21 may have, e.g., 25 (5 x 5) pixels or 49 (7 x 7) pixels.

Fig. 5 shows image conversion performed by means of maximum value extraction when a local maximum value image is to be formed. Referring to Fig. 5, reference numeral 21 denotes one of target regions as shown in Fig. 4. The original image 23 has a pattern 24. When the first arithmetic processing in maximum value extraction is performed for the original image 23, an image 28 shown on the right side in Fig. 5 is obtained. As shown in Fig. 5, in the image 28, the pattern 24 is converted into a pattern 29. More specifically, every time arithmetic processing in maximum value extraction is performed, a pattern portion having a high density level is enlarged, and a background portion is reduced in area.

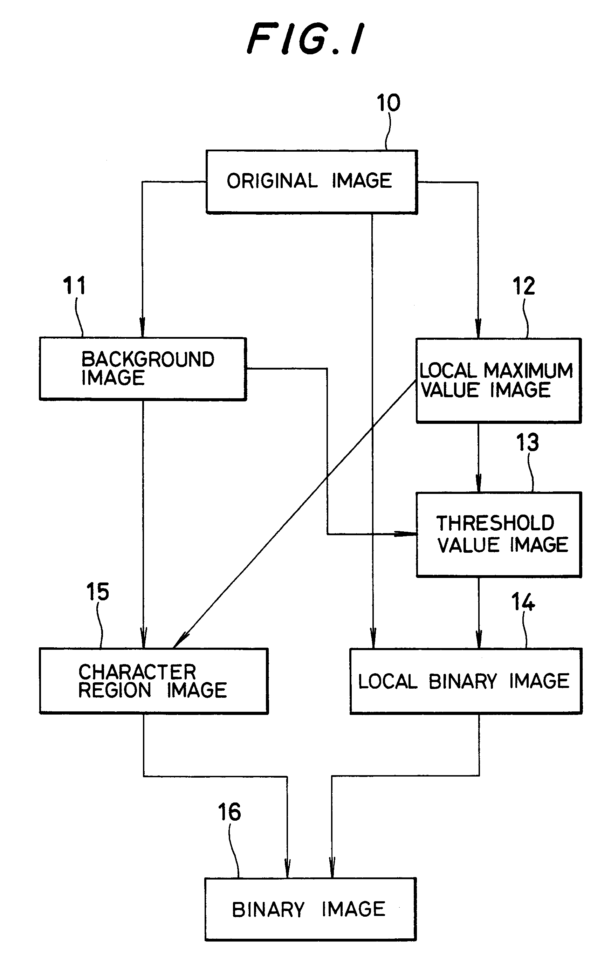

Fig. 1 is a flow chart showing a sequence of formation of various types of images in a method of performing binary quantization of an image according to an embodimennt of the present invention. An arrow in Fig. 1 indicates an image required to form a specific image. A case will be described below, in which a pattern portion has a density level higher than that of a background portion. The present invention, however, can be easily applied to a case opposite to the above case by inverting the image density of each image.

Referring to Fig. 1, an original image 10 is a multi-value image signal obtained by digitizing an image signal input from a TV camera or the like. A background image 11 is a multi-value image obtained from the original image 10 by the above-described minimum value extraction. A local maximum value image 12 is a multi-value image having a local maximum value obtained from the original image 10 by the above-described maximum value extraction as a density. A threshold value image 13 is a multi-value image having a density of a threshold value for performing binary quantization of the original image 10.

A local binary image 14 is obtained by comparing the original image 10 with the threshold value image 13. A character region image 15 is a binary image roughly separated into a pattern portion (a character, a mark or the like) and a background portion. A binary image 16 is a finally obtained binary image.

Methods of forming the respective types of images will be described below.

A method of forming the background image 11 will be described first. In order to obtain the background image 11, a target region having a size substantially equal to the line width of a pattern (e.g., a character or a mark) in the original image 10 is set, and the above-described minimum value extraction is performed. Fig. 6 shows such a case.

Referring to Fig. 6, an original image 30 has a character "L" 32. A target region 31 is set in the original image 30. If, in this case, the size of the target region for minimum value extraction is set to be slightly larger than the line width of the character 32, a background portion is always included in an arbitrary target region 31.

If, therefore, arithmetic processing in minimum value extraction is performed at least once, as indicated by an image 33 on the right side in Fig. 6, in the original image 30, the density level of the portion corresponding to the character (pattern) 32 becomes the same as that of the background portion. In this manner, the background image 11 can be obtained from the original image 10, as shown in Fig. 1.

A method of forming the local maximum value image 12 will be described below. In order to obtain the local maximum value image 12, a target region having a size substantially equal to or slightly smaller than the line width of a pattern in the original image 10 is set, and the above-described maximum value extraction is performed. If maximum value extraction is performed in this manner, the portion (pattern portion) corresponding to the pattern in the original image 10 is slightly enlarged. As a result, the local maximum, value image 12 can be obtained from the original image 10.

A method of forming the threshold value image 13 will be described below. A proper density level for binary quantization of each pixel of the original image 10 is present between the density level of the background image 11 and that of the local maximum value image 12. For this reason, a density level (binary quantization level) as a threshold value for binary quantization is set to be an intermediate value (e.g., a substantially middle density level) of the density levels of the background image 11 and of the local maximum value image 12 for all the pixels (i.e., the entire image). By setting each intermediate value as the density level of a corresponding pixel, the threshold value image 13 can be obtained. Note that the above-mentioned intermediate value may be set by adding a predetermined proportion of a difference between the above-mentioned two density levels (if it is set to be substantially the middle value as described above, about 1/2 the difference is to be added) to the density level of the background image 11. Alternatively, the intermediate value may be set by adding (or subtracting) a predetermined density level to the density level of the background image 11 (or the local maximum value image 12). In this case, since the density level varies depending on the position of the, threshold value image 13, a binary quantization level corresponding to each position can be determined.

A method of forming the local binary image 14 will be described below. In order to obtain the local binary image 14, each pixel of the original image 10 is compared with a corresponding pixel of the threshold value image 13. If the density level of a pixel of the original image 10 is higher, the pixel is set to be "1". If a pixel of the threshold value image 13 is higher, the pixel is set to be "0". By setting such a value as the density level of each pixel, the local binary value 14 can be obtained. This image 14 is substantially separated into a pattern portion and a background portion.

In the local binary image 14, however, if the background portion of the original image 10 includes noise, some pixels of the background portion are mistaken for a pattern portion. For this reason, it is preferable that the pattern portion and the background portion are roughly separated from each other in advance, and the local binary image 14 is corrected by using the image which underwent this rough separation. For this purpose, the character region image 15 is used.

A method of forming the character region image 15 will be described below. A portion including a pattern such as a character or a mark has a high density contrast. By using such a high contrast, pattern and background portions are roughly separated from each other. For this purpose, the background image 11 and the local maximum value image 12 are used. More specifically, a difference in density level between the two images 11 and 12 is calculated. If this difference is higher than a predetermined value, a corresponding pixel is set to be "1". Otherwise, the pixel is set to be "0". By setting such a value as the density level of each pixel, the character region image 15 can be obtained.

Assume that each pixel of the original image 10 is converted into multi-value data having 8 bits so as to have 256 density levels. In this case, if a density level difference between the background image 11 and the local maximum value image 12 is a predetermined value or more (e.g., 40 or more), it may be determined that a corresponding pixel is included in the pattern portion. Note that this predetermined value (threshold value) is preferably set to be slightly higher than a density level difference based on noise of the background portion of the original image 10. In addition, the predetermined value varies depending on the quality of the original image 10. In a strict sense, therefore, a predetermined value must be determined in each determination step.

A method of forming the binary image 16 will be described below. In order to obtain the final binary image 16, the logical product of each pixel of the local binary image 14 and a corresponding pixel of the character region image 15 is calculated. By setting such logical product as the density level of each pixel, the binary image 16 can be obtained. This binary image 16 is obtained by binary quantization using different threshold values depending on the positions of the respective pixels. Therefore, the binary image 16 is a proper binary image from which noise and the like are removed.

In the above-described embodiment, minimum value extraction is performed to form the background image 11. However, an image target including no pattern portion and constituted by only a background portion may be imaged by a TV camera or the like to obtain an image signal in advance so that an original image obtained from this image signal can be used as the background image 11. With this operation, the speed of arithmetic processing can be increased.

A method of forming the local binary image 14 shown in Fig. 1 will be described with reference to a detailed first-order density of an image.

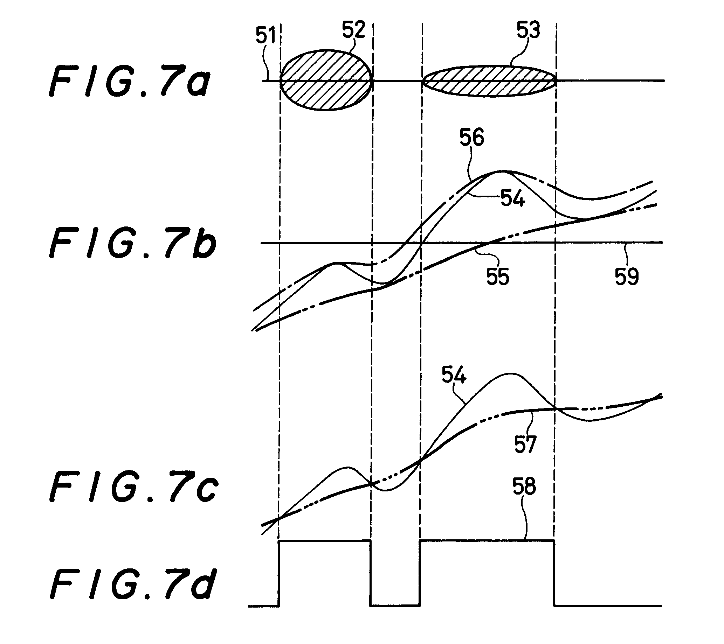

Figs. 7a to 7d are graphs each showing a gradual change in the density level of an image. Fig. 7a two-dimensionally shows an original image. This original image has two elliptic patterns 52 and 53. A method of obtaining a local binary image will be described below with reference to a density distribution above a line 51. Assume that in Fig. 7a, the density level of the background portion is increased toward the right because of nonuniform illumination.

Fig. 7b shows density levels obtained after the above-described minimum and maximum value extractions are performed for the density levels above the line 51. Reference numeral 54 denotes the density level of the original image above the line 51, i.e., a one-dimensional image; 55, a density level obtained after the above-described minimum value extraction is performed for the one-dimensional original image 54; and 56, a density level obtained after the above-described maximum value extraction is performed for the one-dimensional original image 54, i.e., a one-dimensional local maximum value image.

As is apparent from Fig. 7b, if minimum value extraction is performed, the density level 55 of the background is obtained from the density level 54 of the original image. If maximum value extraction is performed, a maximum value near the boundary portion between the pattern portion and the background portion is obtained from the density level 55 of the original image. It is apparent that if a single threshold value, e.g., a line 59, is set for the density level 54 of the one-dimensional original image as in the prior art, proper binary quantization cannot be performed. In addition, it is found that a proper binary quantization level is an intermediate value of the density levels of the one-dimensional background image 55 and of the one-dimensional local maximum image 56.

Referring to Fig. 7c, reference numeral 57 denotes a density level set in the middle of the density levels of the one-dimensional background image 55 and of the one-dimensional local maximum value image 56, i.e., a one-dimensional threshold value image. If the one-dimensional original image 54 is subjected to binary quantization using the one-dimensional threshold value image 57 as a threshold value, a density level 58 after binary quantization is obtained, as shown in Fig. 7d. The density level 58 is a one-dimensional local binary image. It is apparent that the one-dimensional binary image 58 is matched well with a binary image estimated from Fig. 7a.

A case wherein the background portion of an original image includes noise will be described below with reference to each type of one-dimensional image.

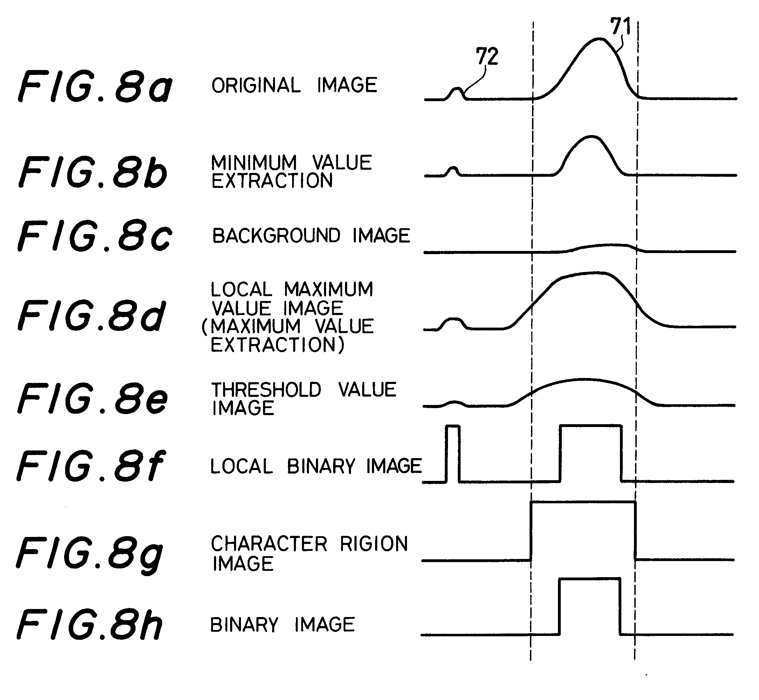

Figs. 8a to 8h are graphs for explaining the respective types of one-dimensional image shown in Fig. 1. Referring to Figs. 8a to 8h, density levels are plotted in the direction of the ordinate. Fig. 8a shows an original image. This original image has a pattern 71 and a noise component 72. Fig. 8b shows a density level obtained when arithmetic processing of minimum value extraction is performed for the original image shown in Fig. 7a only once. As is apparent from Fig. 8b, if minimum value extraction is performed, the width and density level of each of the patterns 71 and the noise component 72 are decreased.

Fig. 8c shows a background image obtained by repeating the arithmetic processing of minimum value extraction two to three times. As is apparent from Fig. 8c, the noise component 72 in the original image is removed, and the density level of the pattern 71 is slightly increased.

Fig. 8d shows a local maximum value image obtained by performing maximum value extraction. As is apparent from Fig. 8d, if maximum value extraction is performed, the width of each of the pattern 71 and the noise component 72 is increased.

Fig. 8e shows a threshold value image obtained from the background image and the local maximum value image. When binary quantization of the original image shown in Fig. 8a is performed by using the threshold value image shown in Fig. 8e, a local binary image shown in Fig. 8f is obtained. As is apparent from Fig. 8f, in the local binary image, the noise component 72 is regarded as a pattern portion as well as the pattern 71, and its density level is increased.

Fig. 8g shows a character region image obtained from the background image and the local maximum value image. In this character region image, when a difference in density level between the background image and the local maximum value image is higher than a predetermined value, the density level is increased. For this reason, as is apparent from Fig. 8g, the noise component 72 is removed. In addition, the width of the pattern portion in the character region image is larger than that of the pattern portion in the local binary image.

Fig. 8h shows a final binary image obtained from the logical product of the local binary image and the character region image. As is apparent from Fig. 8h, the noise component 72 is removed from the final binary image, and binary quantization is performed by using proper binary quantization levels.

According to the method of performing binary quantization of an image of the present invention, binary quantization can be performed, while a pattern portion to be recognized in an image is accurately separated from a background portion, without being influenced by variations due to illumination or printing density variations of an image to be subjected to binary quantization.

Having described a specific preferred embodiment of the present invention with reference to the accompanying drawings, it is to be understood that the invention is not limited to that precise embodiment, and that various changes and modifications may be effected therein by one skilled in the art without departing from the scope or spirit of the invention as defined in the appended claims.

## Claims

1. A method of performing binary quantization of an image having a background portion and a pattern portion, comprising the steps of:

    setting a density level of the background portion in units of small regions of the image in accordance with an actual density of the background portion;

    setting a density level of the pattern portion in units of small regions of the image in accordance with an actual density of the pattern portion;

    setting a threshold value having an intermediate density level of the set density levels of the background and pattern portions in units of small regions of the image; and

    performing binary quantization of the image on the basis of the respective threshold values.

2. A method according to claim 1, wherein the threshold value has substantially the middle density level of the set density levels of the background and pattern portions.

3. A method according to claim 1, wherein a target region having each small region as substantially the center and constituted by a plurality of small regions is set in units of small regions of the image, and

    a density of a small region having the minimum density level in the target region is used to replace a density level of a small region located in substantially the center of the target region, thereby setting the density level of the background portion in units of small regions of the image.

4. A method according to claim 1, wherein a density of another image including no pattern portion and having only the background portion is input in advance, and

    a density level of a background portion of an image to be subjected to binary quantization is set in units of small regions of the image to be subjected to binary quantization in accordance with the density of said another image.

5. A method according to any one of claim 1, wherein a target region having each small region as substantially the center and constituted by a plurality of small regions is set in units of small regions of the image, and

    a density level of a small region having the maximum density level in the target region is used to replace a density level of a small region located in substantially the center of the target region, thereby setting the density level of the pattern portion in units of small regions of the image.

6. A method according to claim 3, wherein a density of an image to be subjected to binary quantization is inverted, and density levels of background and pattern portions of the density-inverted image are set in units of small regions of the image.

7. A method according to claim 5, wherein a density of an image to be subjected to binary quantization is inverted, and density levels of background and pattern portions of the density-inverted image are set in units of small regions of the image.

8. A method according to claims 1 to 7, a pattern region image is formed by performing rough separation of background and pattern portions in accordance with a difference between the set density levels of the background portion and of the pattern portion, and

the image subjected to binary quantization on the basis of the threshold value is corrected by using the pattern region image.

# FIG.1

10

ORIGINAL IMAGE

11

BACKGROUND
IMAGE

12

LOCAL MAXIMUM
VALUE IMAGE

13

THRESHOLD
VALUE IMAGE

15

CHARACTER
REGION IMAGE

14

LOCAL BINARY IMAGE

16

BINARY IMAGE

# FIG.2

$$e_1 = min(a,b,c,d,e,f,g,h,i)$$

# FIG.3

# FIG.4

| a | b | c |
|---|---|---|
| d | e | f |
| g | h | i |

21

$\longrightarrow$

| a | b | c |
|---|---|---|
| d | $e_2$ | f |
| g | h | i |

$e_2 = \max(a,b,c,d,e,f,g,h,i)$

# FIG.5

21
24
23

$\longrightarrow$

21
29
28

# FIG.6

31
32
30

$\longrightarrow$

33

FIG.7a

FIG.7b

FIG.7c

FIG.7d

EP 0 468 730 A2

*FIG.8a* ORIGINAL IMAGE

*FIG.8b* MINIMUM VALUE EXTRACTION

*FIG.8c* BACKGROUND IMAGE

*FIG.8d* LOCAL MAXIMUM VALUE IMAGE (MAXIMUM VALUE EXTRACTION)

*FIG.8e* THRESHOLD VALUE IMAGE

*FIG.8f* LOCAL BINARY IMAGE

*FIG.8g* CHARACTER RIGION IMAGE

*FIG.8h* BINARY IMAGE

EP 0 468 730 A2